(19) Europäisches Patentamt
European Patent Office
Office européen des brevets

(11) **EP 4 266 766 A1**

(12) **EUROPEAN PATENT APPLICATION**
published in accordance with Art. 153(4) EPC

(43) Date of publication:
**25.10.2023 Bulletin 2023/43**

(21) Application number: **20966803.7**

(22) Date of filing: **21.12.2020**

(51) International Patent Classification (IPC):
**H04W 52/04** (2009.01)

(52) Cooperative Patent Classification (CPC):
**H04W 52/04**

(86) International application number:
**PCT/JP2020/047767**

(87) International publication number:
**WO 2022/137305 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Tokyo 100-6150 (JP)**

(72) Inventors:
• **YOSHIOKA, Shohei**
  **Tokyo 100-6150 (JP)**
• **MATSUMURA, Yuki**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL, WIRELESS COMMUNICATION METHOD, AND BASE STATION**

(57) A terminal according to one aspect of the present disclosure includes a control section that determines transmission power for a physical uplink control channel (PUCCH) for transmission of hybrid automatic repeat reQuest acknowledgement (HARQ-ACK) information for a multicast physical downlink shared channel (PDSCH) based on at least one of a higher layer parameter and a transmission power control (TPC) command, and a transmitting section that transmits the PUCCH by using the transmission power. According to one aspect of the present disclosure, it is possible to appropriately determine transmission power for a downlink control channel for multicast downlink data.

FIG. 3A

FOR UE #1 AND UE #2

DCI ... | TPC command | ...

→ DCI FIELD POSITION

EP 4 266 766 A1

FIG. 3B

| TPC command field value | TPC command for UE#1 | TPC command for UE#2 |
|---|---|---|
| 00 | -1 | -1 |
| 01 | +1 | -1 |
| 10 | -1 | +1 |
| 11 | +1 | +1 |

## Description

Technical Field

The present disclosure relates to a terminal, a radio communication method, and a base station in next-generation mobile communication systems.

Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement or the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

Citation List

Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

Summary of Invention

Technical Problem

In future radio communication systems (for example, NR), it is assumed that a plurality of user terminals (User Equipment (UEs)) perform communication under ultra-high-density and high-traffic environments.
In NR, it is assumed that the plurality of UEs perform reception of downlink data using multicast under such environments.
However, in NR specifications thus far, transmission power of the UE for a downlink control channel for multicast downlink data has not been fully studied. Unless the transmission power is determined appropriately, system performance degradation, such as communication quality degradation and throughput reduction, may occur.
Thus, an object of the present disclosure is to provide a terminal, a radio communication method, and a base station that appropriately determine transmission power for a downlink control channel for multicast downlink data.

Solution to Problem

A terminal according to one aspect of the present disclosure includes a control section that determines transmission power for a physical uplink control channel (PUCCH) for transmission of hybrid automatic repeat reQuest acknowledgement (HARQ-ACK) information for a multicast physical downlink shared channel (PDSCH) based on at least one of a higher layer parameter and a transmission power control (TPC) command, and a transmitting section that transmits the PUCCH by using the transmission power.

Advantageous Effects of Invention

According to one aspect of the present disclosure, it is possible to appropriately determine transmission power for a downlink control channel for multicast downlink data.

Brief Description of Drawings

[FIG. 1] FIG. 1 is a diagram to show an example of PTM transmission scheme 1.
[FIG. 2] FIG. 2 is a diagram to show an example of PTM transmission scheme 2.

[FIG. 3] FIGS. 3A and 3B are each a diagram to show an example of a TPC command according to aspect 1-1.

[FIG. 4] FIG. 4 is a diagram to show an example of a TPC command according to aspect 1-2.

[FIG. 5] FIG. 5 is a diagram to show an example of PUCCH configuration according to aspect 4a-1.

[FIG. 6] FIG. 6 is a diagram to show an example of PUCCH configuration according to aspect 4a-2.

[FIG. 7] FIG. 7 is a diagram to show an example of a schematic structure of a radio communication system according to one embodiment.

[FIG. 8] FIG. 8 is a diagram to show an example of a structure of a base station according to one embodiment.

[FIG. 9] FIG. 9 is a diagram to show an example of a structure of a user terminal according to one embodiment.

[FIG. 10] FIG. 10 is a diagram to show an example of a hardware structure of the base station and the user terminal according to one embodiment.

Description of Embodiments

(PUCCH Format)

For future radio communication systems (for example, Rel. 15 (or later versions), 5G, NR, or the like), a configuration (also referred to as a format, a PUCCH format (PF), or the like) for an uplink control channel (for example, a PUCCH) used for transmitting uplink control information (UCI) is under study. For example, for Rel-15 NR, support for five kinds of PFs, PF 0 to PF 4, is under study. Note that the names of the PFs described below are just examples, and different names may be used.

For example, PF 0 and PF 1 are PFs used for transmitting UCI having 2 bits or less (up to 2 bits). For example, the UCI may be at least one of transmission confirmation information (also referred to as a Hybrid Automatic Repeat reQuest-Acknowledgement (HARQ-ACK), an acknowledgement (ACK), a negative-acknowledgement (NACK), or the like) and a scheduling request (SR). PF 0 can be allocated to one or two symbols, and is thus also referred to as a short PUCCH, a sequence-based short PUCCH, or the like. On the other hand, PF1 can be allocated to 4 to 14 symbols, and is thus also referred to as a long PUCCH or the like. PF 0 may transmit a sequence obtained by a cyclic shift of a base sequence by using a cyclic shift based on at least one of an initial cyclic shift (CS) index, a UCI value, a slot number, and a symbol number. In PF 1, by using block-wise spread in a time domain using at least one of a CS and a time domain (TD)-orthogonal cover code (OCC), a plurality of user terminals may be code division multiplexed (CDMed) in an identical physical resource block (PRB).

PF 2 to PF 4 are PFs used for transmitting UCI (for example, channel state information (CSI) or at least one of CSI, an HARQ-ACK, and an SR) having more than 2 bits. PF 2 can be allocated to 1 or 2 symbols, and is thus also referred to as a short PUCCH or the like. On the other hand, PF 3 and PF 4 can be allocated to 4 to 14 symbols, and are thus also referred to as a long PUCCH or the like. In PF 4, a plurality of user terminals may be CDMed by using block-wise spread before a DFT (with a frequency domain (FD)-OCC).

Intra-slot frequency hopping may be applied to PF 1, PF 3, and PF 4. Let a length of the PUCCH be $N_{symb}$, the length before frequency hopping (first hop) may be floor $(N_{symb}/2)$, and the length after frequency hopping (second hop) may be ceil$(N_{Symb}/2)$.

Waveforms of PF 0, PF 1, and PF 2 may be Cyclic Prefix (CP)-Orthogonal Frequency Division Multiplexing (OFDM). Waveforms of PF 3 and PF 4 may be Discrete Fourier Transform (DFT)-spread(s)-OFDM.

Allocation of a resource (for example, a PUCCH resource) used for transmission of the uplink control channel is performed by using higher layer signaling and/or downlink control information (DCI). Here, it is only necessary that the higher layer signaling is, for example, at least one of RRC (Radio Resource Control) signaling, system information (for example, at least one of RMSI (Remaining Minimum System Information), OSI (Other System Information), an MIB (Master Information Block), and an SIB (System Information Block)), and broadcast information (PBCH (Physical Broadcast Channel)).

In NR, the number of symbols allocated to the PUCCH (which may be referred to as PUCCH allocation symbols, PUCCH symbols, or the like) can be determined in any one of a slot-specific manner, a cell-specific manner, and a user terminal-specific manner or combinations of these. It is expected that the more the number of PUCCH symbols increases, the more a communication range (coverage) extends, and thus, for example, operation in which the more a user terminal is distant from a base station (for example, eNB or gNB), the more the number of symbols increases is assumed.

(PUCCH Power Control)

In NR, transmission power for the PUCCH is controlled based on a TPC command (also referred to as a value, an increasing/decreasing value, a correction value, an indicated value, or the like) indicated by a value of a field (also referred to as a TPC command field, a first field, or the like) in DCI.

For example, by using index 1 of a power control adjustment state (PUCCH power control adjustment state), transmission power for the PUCCH ($P_{PUCCH,b,f,c}$ (i, $q_u$, $q_d$, l)) [dBm] in PUCCH transmission occasion (also referred to as a transmission period or the like) i regarding active UL BWP b for carrier f in serving cell c may be based on at least one of $P_{CMAX,f,c}$ (i), $P_{O\_PUCCH,b,f,c}$ ($q_u$), $M^{PUCCH}_{RB,b,f,c}$ (i), $PL_{b,f,c}$ ($q_d$), $\Delta_{F\_PUCCH}$ (F), $\Delta_{TF,b,f,c}$ (i), and $g_{b,f,c}$ (i, 1). The power control adjustment state may be referred to as a value based on a TPC command with power control adjustment state index l, an accumulated value of the TPC command, or a closed-loop value. 1 may be referred to as a closed-loop index.

PUCCH transmission occasion i is a period in which the PUCCH is transmitted, and may be constituted by, for example, one or more symbols, one or more slots, or the like.

$P_{PUCCH,b,f,c}$ (i, $q_u$, $q_d$, 1) may be expressed by Equation (1) below.
[Math. 1]

(Equation 1)

$$P_{\text{PUCCH},b,f,c}(i, q_u, q_d, l)$$
$$= min \begin{cases} P_{\text{CMAX},f,c}(i), \\ P_{\text{O\_PUCCH},b,f,c}(q_u) + 10\,log_{10}(\,2^{\mu} \cdot M^{\text{PUCCH}}_{\text{RB},b,f,c}(i)) + PL_{b,f,c}(q_d) \\ \qquad + \Delta_{\text{F\_PUCCH}}(F) + \Delta_{\text{TF},b,f,c}(i) + g_{b,f,c}(i,l) \end{cases}$$

[dBm]

$P_{CMAX,f,c}$ (i) is, for example, transmission power (also referred to as maximum transmission power, UE maximum output power, or the like) of a user terminal configured for carrier f in serving cell c in transmission occasion i. $P_{O\_PUCCH,b,f,c}$ ($q_u$) is, for example, a parameter related to target received power configured for active UL BWP b for carrier f in serving cell c in transmission occasion i (also referred to as, for example, a parameter related to transmission power offset, transmission power offset P0, a target received power parameter, or the like).

$M^{PUCCH}_{RB,b,f,c}$ (i) is, for example, the number of resource blocks (bandwidths) allocated to the PUCCH for transmission occasion i in active UL BWP b for carrier f in serving cell c and with subcarrier spacing μ. $PL_{b,f,c}$ ($q_d$) is, for example, a pathloss (pathloss estimation [dB], pathloss compensation) calculated in the user terminal by using index $q_d$ of a reference signal (pathloss reference RS, RS for pathloss reference, DL-RS for pathloss measurement, PUCCH-PathlossReferenceRS) for a downlink BWP associated with active UL BWP b for carrier f in serving cell c.

If pathloss reference RSs (pathlossReferenceRSs) are not given to the UE or before a dedicated higher layer parameter is given to the UE, the UE calculates pathloss $PL_{b,f,c}$ ($q_d$) by using an RS resource obtained from an SS/PBCH block used by the UE for obtaining an MIB.

If pathloss reference RS information (pathlossReferenceRSs in PUCCH power control information (PUCCH-PowerControl)) is given to the UE, and PUCCH spatial relation information (PUCCH-SpatialRelationInfo) is not given to the UE, the UE obtains a value of a reference signal (referencesignal) in a PUCCH pathloss reference RS from a PUCCH pathloss reference RS-ID (PUCCH-PathlossReferenceRS-Id) having index 0 in PUCCH pathloss reference RS information (PUCCH-PathlossReferenceRS). Resources of this reference signal are present on any one of the same serving cell or a serving cell indicated by a value of pathloss reference linking information (pathlossReferenceLinking), if given. The pathloss reference linking information indicates which of DL in a special cell (SpCell) or DL in a secondary cell (SCell) corresponding to this UL is applied by the UE as pathloss reference. The SpCell may be a primary cell (PCell) in a master cell group (MCG), or may be a primary secondary cell (PSCell) in a secondary cell group (SCG). The pathloss reference RS information indicates a set of reference signals (for example, CSI-RS configurations or SS/PBCH blocks) used for PUCCH pathloss estimation.

$\Delta_{F\_PUCCH}$ (F) is a higher layer parameter given for each of PUCCH formats. $\Delta_{TF,b,f,c}$ (i) is a transmission power adjustment component (offset) for UL BWP b for carrier f in serving cell c.

$g_{b,f,c}$ (i, l) is a value based on a TPC command with the above-described power control adjustment state index 1 for the active UL BWP for carrier f in serving cell c and in transmission occasion i (for example, a power control adjustment state, an accumulated value of the TPC command, a closed-loop value, or a PUCCH power adjustment state). For example, $g_{b,f,c}$ (i, l) may be based on $\delta_{PUCCH,b,f,c}$ (i, l).

$g_{b,f,c}$ (i, l) may be expressed by Equation (2) below.
[Math. 2]

(Equation 2)

$$g_{b,f,c}(i, l) = g_{b,f,c}(i - i_0, l) + \sum_{m=0}^{C(C_i)-1} \delta_{\text{PUCCH},b,f,c}(m, l)$$

Here, $\delta_{PUCCH,b,f,c}$ (i, I) is a TPC command value, and may be included in DCI format 1_0 or DCI format 1_1 detected by the UE in PUCCH transmission occasion i on active UL BWP b for carrier f in serving cell c, or may be coded by being combined with another TPC command in DCI format 2_2 having a CRC scrambled by a specific RNTI (Radio Network Temporary Identifier) (for example, a TPC-PUSCH-RNTI) . $\delta_{PUCCH,b,f,c}$ may be a value to be accumulated (for example, any one of -1, 0, 1, and 3), the value being mapped to a value of a TCI command field.

$\sum_{m=0}^{C(Ci)-1}\delta_{PUCCH,b,f,c}$ (m, 1) may be the sum of TPC command values in set $C_i$ of TPC command values having cardinality C ($C_i$). $C_i$ may be a set of TPC command values received by the UE for PUCCH power control adjustment state 1 between $K_{PUCCH}$ (i-i_0)-1 symbols before PUCCH transmission occasion i-i_0 and $K_{PUCCH}$ (i) symbols before PUSCH transmission occasion i on active UL BWP b for carrier f in serving cell c. io may be the lowest positive integer that causes $K_{PUCCH}$ (i-i_0) symbols before PUSCH transmission occasion i-i_0 to be earlier than $K_{PUCCH}$ (i) symbols before PUSCH transmission occasion i.

If PUCCH transmission responds to detection of DCI format 1_0 or DCI format 1_1 by the UE, $K_{PUCCH}$ (i) may be the number of symbols in active UL BWP b for carrier f in serving cell c after the last symbol for corresponding PDCCH reception and before the first symbol for the PUCCH transmission. If the PUCCH transmission is configured by configured grant configuration information (ConfiguredGrantConfig), $K_{PUSCH}$ (i) may be the number of $K_{PUCCH,min}$ symbols equal to the product of the number $N_{symb}^{slot}$ of symbols per slot in active UL BWP b for carrier f in serving cell c and a minimum value of a value provided by k2 in PUSCH-common configuration information (PUSCH-ConfigCommon).

If information (twoPUCCH-PC-AdjustmentStates) indicating use of two PUCCH power control adjustment states and PUCCH spatial relation information (PUCCH-SpatialRelationInfo) are provided for the UE, 1 may be equal to {0, 1}, and when the information indicating use of the two PUCCH power control adjustment states or the PUCCH spatial relation information is not provided for the UE, 1 may be equal to 0.

If the UE obtains a TPC command value from DCI format 1_0 or DCI format 1_1, and if the PUCCH spatial relation information is provided for the UE, the UE may obtain mapping between a PUCCH spatial relation information ID (pucch-SpatialRelationInfoId) value and a closed-loop index (closedLoopIndex, power adjustment state index 1) by using an index provided by a PUCCH P0 ID (p0-PUCCH-Id in p0-Set in PUCCH-PowerControl in PUCCH-Config). When the UE has received an activation command including a value of the PUCCH spatial relation information ID, the UE may determine a value of the closed-loop index to provide an 1 value through linking to a corresponding PUCCH P0 ID.

If a configuration of a $P_{O\_PUCCH,b,f,c}$ ($q_u$) value for corresponding PUCCH power adjustment state 1 is provided for the UE by a higher layer in relation to active UL BWP b for carrier f in serving cell c, $g_{b,f,c}$ (i, 1) = 0, and k = 0, 1, ..., i. If the PUCCH spatial relation information is provided for the UE, the UE may determine, based on the PUCCH spatial relation information associated with a PUCCH P0 ID corresponding to $q_u$ and a closed-loop index value corresponding to 1, an 1 value based on a $q_u$ value.

$q_u$ may be a PUCCH P0 ID (p0-PUCCH-Id) indicating PUCCH P0 (P0-PUCCH) in a PUCCH P0 set (p0-Set).

If PUCCH spatial relation information (PUCCH-SpatialRelationInfo) is not provided for the UE, the UE obtains a PUCCH P0 value (p0-PUCCH-Value) from a PUCCH P0-ID value equal to a minimum value of the PUCCH P0-ID (p0-PUCCH-Id) in the P0 set (p0-set).

If pathloss reference RSs (pathlossReferenceRSs) are provided for the UE, and PUCCH spatial relation information (PUCCH-SpatialRelationInfo) is not provided for the UE, the UE obtains a value of a reference signal (referencesignal) in a PUCCH pathloss reference RS from a PUCCH pathloss reference RS-ID (pucch-PathlossReferenceRS-Id) having index 0 in a PUCCH pathloss reference RS (PUCCH-PathlossReferenceRS). The obtained RS resource is present on a primary cell, or is, if pathloss reference linking (pathlossReferenceLinking) is provided, present on a serving cell indicated by a value of the pathloss reference linking.

If a case that the number of PUCCH power control adjustment states maintained by the UE is 2 (twoPUCCH-PC-AdjustmentStates) and the PUCCH spatial relation information are provided for the UE, PUCCH power control adjustment state (closed-loop) index 1 $\in$ {0, 1}. If a case that the number of PUCCH power control adjustment states maintained by the UE is 2 or the PUCCH spatial relation information is not provided for the UE, PUCCH power control adjustment state (closed-loop) index I = 0.

In other words, if the PUCCH spatial relation information is not provided for the UE, P0, PL-RS, and closed-loop index are determined in accordance with a rule. In this case, the lowest PUCCH P0-ID is applied, PUCCH pathloss reference RS-ID = 0 is applied, and 1 = 0 is applied.

In an RRC information element (IE), a PUCCH power control information element (PUCCH-PowerControl) includes a P0 set (p0-Set) being a P0 for PUCCH (P0-PUCCH) set and pathloss reference RSs (pathlossReferenceRSs) being a PUCCH pathloss reference RS (PUCCH-PathlossReferenceRS) set. P0 for PUCCH includes a P0-PUCCH-ID (P0-PUCCH-Id) and a P0-PUCCH value (p0-PUCCH-Value). The PUCCH pathloss reference RS includes a PUCCH pathloss reference RS-ID (PUCCH-PathlossReferenceRS-Id) and a reference signal (referenceSignal, SSB index or NZP-CSI-RS resource ID).

(NR Multicast/Broadcast)

In Rel-16 (or previous versions) NR, the basics of transmission of at least one of a signal and a channel (hereinafter expressed as a signal/channel) from a NW to a UE is unicast transmission. In this case, it is assumed that identical downlink (DL) data signals/channels (for example, downlink shared channels (PDSCHs)) transmitted from the NW to a plurality of UEs are received by the respective UEs using a plurality of reception occasions corresponding to a plurality of beams (or panels) of the NW.

A case where a plurality of UEs simultaneously receive identical signals/channels under ultra-high-density and high-traffic circumstances, such as environments (for example, a stadium or the like) in which a number of UEs are geographically concentrated, is also assumed. In such a case, it is assumed that a case that a plurality of UEs are present in an identical area, and in order for each UE to receive an identical signal/channel, each UE performs reception of the signal/channel by using unicast can secure reliability of communication, but reduces resource use efficiency.

A group scheduling mechanism for a multicast/broadcast service (MBS) received by the plurality of UEs is under study.

For example, scheduling of a multicast PDSCH using single or multiple DCIs is under study. In this case, a DCI size (payload size, overhead) may become large.

In Point-to-Point (PTP) transmission (delivery method), a RAN node (for example, a base station) transmits, to an individual UE, a separate copy of an MBS data packet via radio. In Point-to-Multipoint (PTM) transmission (delivery method), the RAN node (for example, the base station) transmits, to a set of UEs, a single copy of the MBS data packet via radio. The PTP transmission may be referred to as unicast transmission.

It is under study that the PTP transmission uses a UE-specific PDCCH for a plurality of RRC connected UEs (RRC_CONNECTED UEs) in order to schedule a UE-specific PDSCH and that the UE-specific PDCCH has a cyclic redundancy check (CRC) scrambled by a UE-specific radio network temporary identifier (RNTI) (for example, C-RNTI), and the UE-specific PDSCH is scrambled by using the same UE-specific RNTI.

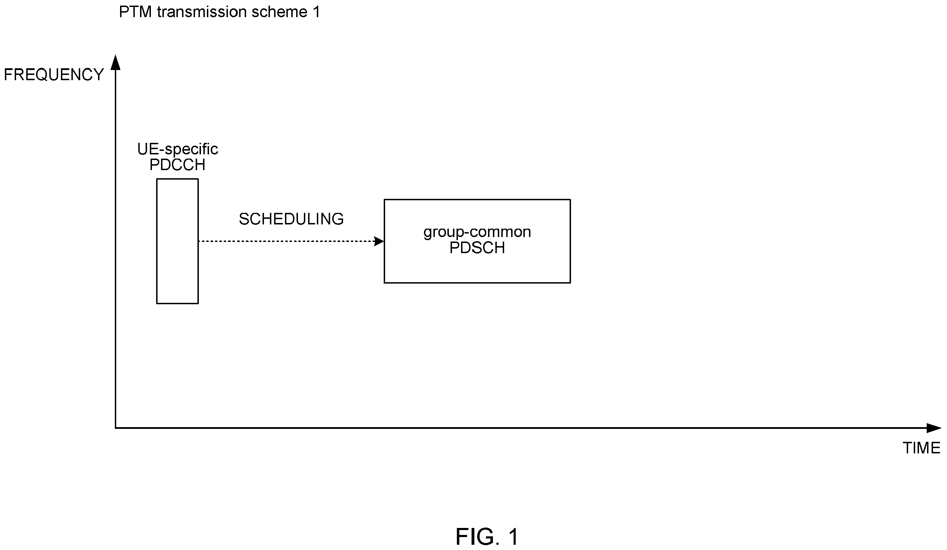

It is under study that PTM transmission scheme 1 uses a group-common PDCCH for a plurality of RRC connected UEs in the same MBS group in order to schedule a group-common PDSCH and that the group-common PDCCH has a CRC scrambled by a group-common RNTI, and the group-common PDSCH is scrambled by using the same group-common RNTI (FIG. 1).

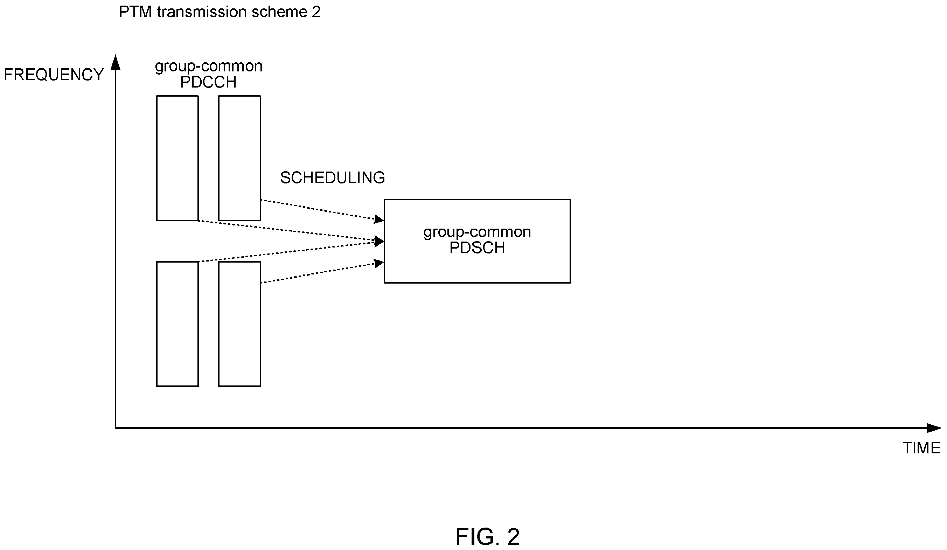

It is under study that PTM transmission scheme 2 uses a UE-specific PDCCH for a plurality of RRC connected UEs in the same MBS group in order to schedule a group-common PDSCH and that the UE-specific PDCCH has a CRC scrambled by a UE-specific RNTI (for example, C-RNTI), and the group-common PDSCH is scrambled by using the group-common RNTI (FIG. 2).

Here, the UE-specific PDCCH/PDSCH can be identified by a target UE, but another UE in the same MBS group fails to identify the UE-specific PDCCH/PDSCH. The group-common PDCCH/PDSCH are transmitted in the same time/frequency resource, and can be identified by all UEs in the same MBS group.

HARQ feedback for improvement in reliability of the MBS is under study.

For the RRC connected UEs to receive multicast, at least PTM transmission scheme 1 may support at least one of feedback method 1 and feedback method 2 below.

[Feedback Method 1] HARQ-ACK Feedback Based on ACK/NACK for Multicast (ACK/NACK Based HARQ-ACK Feedback, ACK/NACK Based PUCCH, ACK/NACK Transmission, ACK/NACK Feedback, HARQ-ACK Information Including ACK or NACK)

A UE that successfully decodes the PDSCH transmits an ACK. A UE that fails to decode the PDSCH transmits a NACK.

[Feedback Method 2] HARQ-ACK Feedback Based Only on NACK for Multicast (NACK-only Based HARQ-ACK Feedback, NACK-only Based PUCCH, NACK-only Transmission, NACK-only Feedback, HARQ-ACK Information Including Only NACK)

A UE that successfully decodes the PDSCH does not transmit an ACK. A UE that fails to decode the PDSCH transmits a NACK.

However, UE operation related to TPC for a PUCCH for HARQ-ACK transmission corresponding to the multicast PDSCH is indefinite. For example, issue 1 to issue 4 below can occur.

[Issue 1]

Handling of a TPC command in PTM transmission scheme 1 is indefinite.

[Issue 2]

A method for accumulating a TPC command for a PUCCH for HARQ-ACK transmission corresponding to a unicast PDSCH and a TPC command for a PUCCH for HARQ-ACK transmission corresponding to a multicast PDSCH is indefinite.

[Issue 3]

A non-feedback-related TPC command accumulation method in a case where NACK-only feedback is used is indefinite.

[Issue 4]

Whether an open-loop power control (OLPC) parameter is made common is indefinite. For example, whether the OLPC parameter is made common between a PUCCH for HARQ-ACK transmission corresponding to a unicast PDSCH and a PUCCH for HARQ-ACK transmission corresponding to a multicast PDSCH is indefinite. For example, whether the OLPC parameter is made common between ACK/NACK feedback and NACK-only feedback is indefinite.

Unless UE operation related to TPC for the PUCCH for HARQ-ACK transmission corresponding to the multicast PDSCH is definite, communication quality degradation, increase in power consumption, or the like may occur.

Thus, the inventors of the present invention came up with the idea of a power control method in a multicast PDSCH/unicast PDSCH.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be interchangeably interpreted. In the present disclosure, a cell, a serving cell, a CC, a carrier, a BWP, a DL BWP, a UL BWP, an active DL BWP, an active UL BWP, and a band may be interchangeably interpreted. In the present disclosure, an index, an ID, an indicator, and a resource ID may be interchangeably interpreted. In the present disclosure, "support," "control," "controllable," "operate," and "operable" may be interchangeably interpreted.

In the present disclosure, configure, activate, update, indicate, enable, specify, and select may be interchangeably interpreted.

In the present disclosure, use, determine, apply, and select may be interchangeably interpreted.

In the present disclosure, link, associate, correspond, and map may be interchangeably interpreted. In the present disclosure, allocate, assign, monitor, and map may be interchangeably interpreted.

In the present disclosure, the higher layer signaling may be, for example, any one or combinations of Radio Resource Control (RRC) signaling, Medium Access Control (MAC) signaling, broadcast information, or the like. In the present disclosure, RRC, RRC signaling, an RRC parameter, a higher layer, a higher layer parameter, an RRC information element (IE), and an RRC message may be interchangeably interpreted.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, a MAC CE and an activation/deactivation command may be interchangeably interpreted.

In the present disclosure, a PUCCH, a PUSCH, repetition, and a transmission occasion may be interchangeably interpreted.

In the present disclosure, multicast, groupcast, broadcast, and an MBS may be interchangeably interpreted. In the present disclosure, a multicast PDSCH and a PDSCH scrambled by a group-common RNTI may be interchangeably interpreted.

In the present disclosure, HARQ-ACK, HARQ-ACK information, HARQ, ACK/NACK, ACK, NACK, and UCI may be interchangeably interpreted.

In the present disclosure, "specific," "dedicated," "UE-specific," and "UE-dedicated" may be interchangeably interpreted.

In the present disclosure, "common," "shared," "group-common," "UE-common," and "shared by UEs" may be interchangeably interpreted.

In the present disclosure, UE-dedicated DCI and DCI having a CEC scrambled by a UE-dedicated RNTI may be interchangeably interpreted. The UE-dedicated RNTI may be, for example, a C-RNTI.

In the present disclosure, UE-common DCI and DCI having a CEC scrambled by a UE-common RNTI may be interchangeably interpreted. The UE-common RNTI may be, for example, a multicast-RNTI.

In the present disclosure, a PDSCH cast type may indicate whether a PDSCH is unicast or multicast.

(Radio Communication Method)

A UE may determine transmission power for a PUCCH for transmission of HARQ-ACK information for a multicast PDSCH based on at least one of a higher layer parameter and a TPC command, and may transmit the PUCCH by using the transmission power.

<First Embodiment>

In PTM transmission scheme 1, for a TPC command field in DCI, the UE may follow at least one of aspect 1-1 to aspect 1-3 below.

[Aspect 1-1]

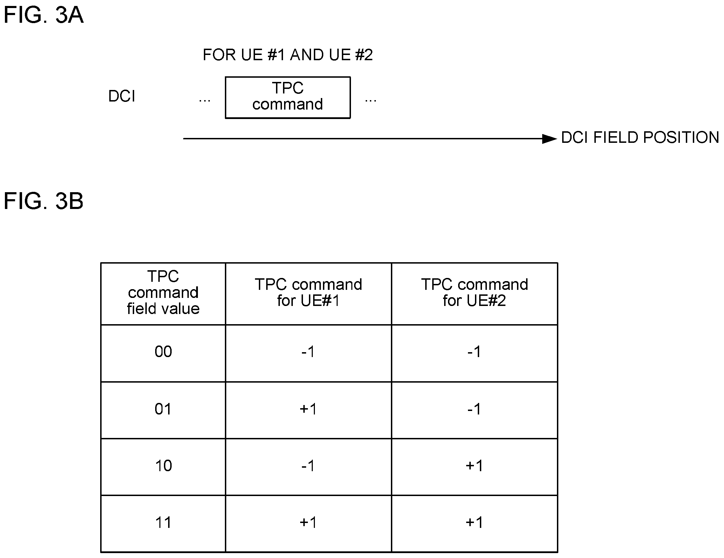

The TPC command field in DCI scheduling the multicast PDSCH includes a single TPC command. The UE uses the command for transmission of a PUCCH for an HARQ-ACK corresponding to the multicast PDSCH.
In an example of FIG. 3A, DCI scheduling a multicast PDSCH for UE #1 and UE #2 includes a single TPC command. The DCI may be group-common DCI.
A TPC command value corresponding to each code point of the TPC command field may be configured for each UE (in a UE-dedicated manner). In this case, different TPC command values can be indicated for a plurality of UEs by a common TPC command field.
In an example of FIG. 3B, a TPC command value corresponding to each code point of the TPC command field is configured for each UE by a higher layer parameter. A TPC command value for UE #1 and a TPC command value for UE #2 may be different from each other.

[Aspect 1-2]

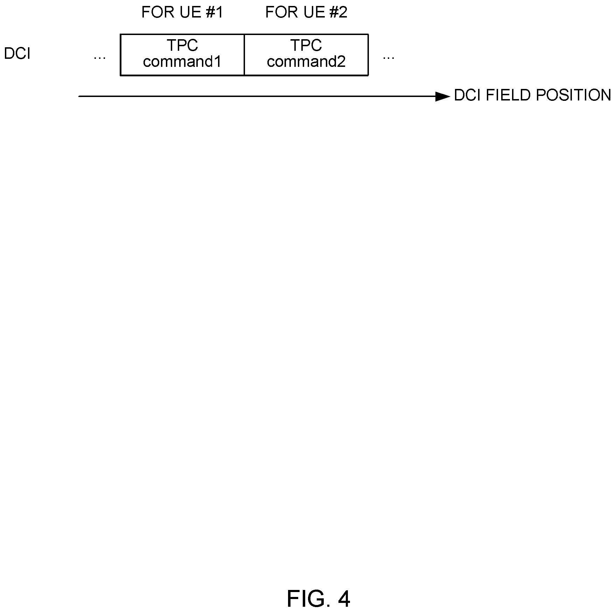

A TPC command field or a combination of the TPC command field and another field in DCI scheduling the multicast PDSCH includes a plurality of TPC commands. The UE uses any one of the plurality of TPC commands for transmission of a PUCCH for an HARQ-ACK corresponding to the multicast PDSCH.
In an example of FIG. 4, DCI scheduling a multicast PDSCH for UE #1 and UE #2 includes a TPC command for UE #1 and a TPC command for UE #2. The DCI may be group-common DCI.
The UE may follow any one of option 1 and option 2 below.

[[Option 1]]

Which of the plurality of the TPC commands is used for the transmission of the PUCCH for the HARQ-ACK corresponding to the multicast PDSCH may be defined in specifications, or may be configured by higher layer parameter. For example, use of the second TPC command of the plurality of TPC commands may be configured, and the second TPC command may be used for transmission of the PUCCH for the HARQ-ACK corresponding to the multicast PDSCH. For example, the DCI may include blocks (closed-loop indicators and TPC commands) having the same structure as that of a group TPC command (DCI format 2_2), and which of the plurality of blocks is used for transmission of the PUCCH for the HARQ-ACK corresponding to the multicast PDSCH may be configured by higher layer parameter. The higher layer parameter may be the same as a parameter for DCI format 2_2.
When an RNTI (for example, a TPC-PUCCH-RNTI) used for CRC scrambling for DCI format 2_2 is configured, an RNTI used for CRC scrambling for the DCI may be configured. The RNTI used for the CRC scrambling for the DCI may be associated with the RNTI used for the CRC scrambling for DCI format 2_2, or may be the same as the RNTI used for the CRC scrambling for DCI format 2_2.

[[Option 2]]

Which of the plurality of the TPC commands is used for the transmission of the PUCCH for the HARQ-ACK corresponding to the multicast PDSCH may be determined based on at least one of a PUCCH format, a UCI payload size, a PUCCH resource, a PUCCH resource set, and the number of symbols for the PUCCH.

[Aspect 1-3]

The DCI scheduling the multicast PDSCH in PTM transmission scheme 1 does not include a TPC command field.
Transmission power for the PUCCH for the HARQ-ACK corresponding to the multicast PDSCH may be determined based on the group TPC command. A case that the UE capable of applying PTM transmission scheme 1 (or the multicast PDSCH) is required to be capable of receiving DCI format 2_2 may be defined.

Closed-loop power control (CLPC) may not be applied to the PUCCH for the HARQ-ACK corresponding to the multicast PDSCH.

The UE may use an accumulated value of a TPC command for a PUCCH for an HARQ-ACK corresponding to a unicast PDSCH for the PUCCH for the HARQ-ACK corresponding to the multicast PDSCH. The UE may assume that a TPC command in the DCI for PTM transmission scheme 1 is 0.

According to this embodiment, TPC in PTM transmission scheme 1 is definite.

<Second Embodiment>

A UE that receives both TPC command A for PUCCH A for HARQ-ACK A transmission corresponding to a unicast PDSCH and TPC command B for PUCCH B for HARQ-ACK B transmission corresponding to a multicast PDSCH determines transmission power for each PUCCH in accordance with at least one of aspect 2-1 to aspect 2-3 below.

[Aspect 2-1]

The UE accumulates TPC command A and TPC command B separately. The UE may determine transmission power for PUCCH A based on an accumulated value of TPC command A, and may determine transmission power for PUCCH B based on an accumulated value of TPC command B.

For example, separate values of a PUCCH power control adjustment state (closed-loop index, 1) may be used for PUCCH A and PUCCH B. 3 or more values (0, 1, 2, ...) of the PUCCH power control adjustment state may be used.

For example, m in Equation (2) may be limited to the same cast type.

[Aspect 2-2]

The UE accumulates TPC command A and TPC command B together. The UE may determine transmission power for PUCCH A and PUCCH B based on an accumulated value of TPC command A and TPC command B.

For example, the same value of the PUCCH power control adjustment state may be used for PUCCH A and PUCCH B.

[Aspect 2-3]

The UE uses (determines/applies/selects) any one of aspect 2-1 and aspect 2-2 based on at least one of state 1 to state 3 below.

[[State 1]] An RRC parameter/MAC CE/DCI format/DCI field/PDCCH (DCI CRC) scrambling RNTI/CORESET//search space/UE capability.
[[State 2]] Whether to map (multiplex) HARQ-ACK A and HARQ-ACK B to an identical PUCCH.
[[State 3]] Whether PUCCH resource configuration for PUCCH A and PUCCH resource configuration for PUCCH B are the same.

According to this embodiment, a method for accumulating a TPC command for a PUCCH for HARQ-ACK transmission corresponding to a unicast PDSCH and a TPC command for a PUCCH for HARQ-ACK transmission corresponding to a multicast PDSCH is definite.

<Third Embodiment>

In a case where NACK-only feedback is used, a UE may process, in accordance with at least one of aspect 3-1 to aspect 3-3 below, a TPC command corresponding to a PUCCH transmission occasion in which PUCCH transmission has not been performed.

[Aspect 3-1]

The UE includes, in an accumulated value for transmission power calculation, a TPC command in DCI corresponding to the PUCCH transmission, and calculates transmission power for a PUCCH transmission after the PUCCH transmission. In other words, the UE accumulates a TPC command in DCI to indicate a resource for the PUCCH transmission.

[Aspect 3-2]

The UE does not include, in the accumulated value for transmission power calculation, the TPC command in the DCI corresponding to the PUCCH transmission, and calculates transmission power for a PUCCH transmission after the PUCCH transmission. In other words, the UE does not accumulate the TPC command in the DCI to indicate the resource for the PUCCH transmission.

[Aspect 3-3]

The UE uses (determines/applies/selects) any one of aspect 3-1 and aspect 3-2 based on at least one of state 1 and state 2 below.

[[State 1]] An RRC parameter/MAC CE/DCI format/DCI field/PDCCH (DCI CRC) scrambling RNTI/CORESET/search space/UE capability.

[[State 2]] Whether a PUCCH resource is shared between a plurality of UEs.

According to this embodiment, in a case where NACK-only feedback is used, the UE can process a TPC command appropriately even when a PUCCH is not transmitted in a PUCCH transmission occasion.

<Fourth Embodiment>

An OLPC parameter for a PUCCH for HARQ-ACK transmission corresponding to a multicast PDSCH may follow at least one of aspect 4a to aspect 4c below. The OLPC parameter may include at least one of P0 (p0-nominal/p0-Set/P0-PUCCH), $\alpha$ (Alpha), a pathloss reference RS (pathlossReferenceRSs/PUCCH-PathlossReferenceRS), and offset for each PUCCH format (deltaF-PUCCH-f0/deltaF-PUCCH-f1/...).

<<Aspect 4a>>

OLPC parameter A for PUCCH A for HARQ-ACK A transmission corresponding to a unicast PDSCH and OLPC parameter B for PUCCH B for HARQ-ACK B transmission corresponding to a multicast PDSCH may follow at least one of aspect 4a-1 to aspect 4a-5 below.

[Aspect 4a-1]

Parameter A and parameter B are configured separately. The UE may use parameter A and parameter B for respective PUCCH A and PUCCH B.

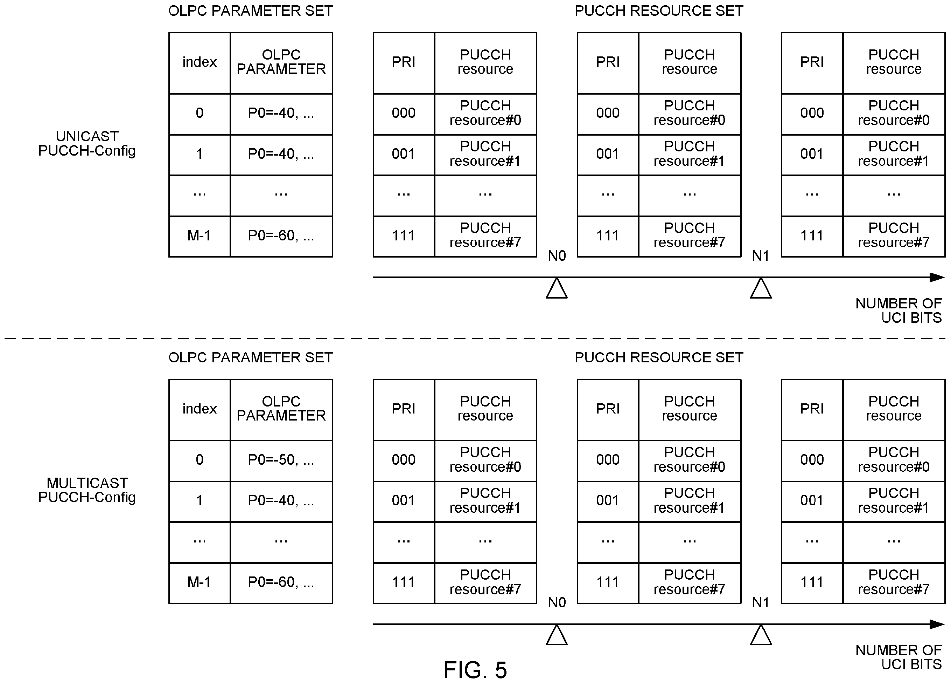

In an example of FIG. 5, PUCCH configuration (PUCCH-Config) for unicast includes parameter set (for example, a P0 set (p0-Set), a pathloss reference RS list (pathlossReferenceRSs), or the like) for OLPC and one or more PUCCH resource sets (PUCCH resource set #0, PUCCH resource set #1, ...). Each PUCCH resource set includes one or more PUCCH resources. Each PUCCH resource is associated with a PUCCH spatial relation (PUCCH-SpatialRelationInfo). The PUCCH spatial relation includes an ID of P0 in the P0 set (P0-PUCCH-Id).

When the number of UCI bits is N0 bits or less, PUCCH resource set #0 (first PUCCH resource set, PUCCH resource set ID = 0) may be used. When the number of UCI bits is greater than N0 bits, and is N1 bits or less, PUCCH resource set #1 (second PUCCH resource set, PUCCH resource set ID = 1) may be used. When the number of UCI bits is greater than N1 bits, PUCCH resource set #2 (third PUCCH resource set, PUCCH resource set ID = 2) may be used. N0 may be 2. N1 may be configured by higher layer signaling, or may be a value defined in specifications.

In the example of FIG. 5, PUCCH configuration fo multicast includes parameter set (for example, a P0 set (p0-Set), a pathloss reference RS list (pathlossReferenceRSs), or the like) for OLPC and one or more PUCCH resource sets (PUCCH resource set #0, PUCCH resource set #1, ...). Each PUCCH resource set includes one or more PUCCH resources. Each PUCCH resource is associated with a PUCCH spatial relation (PUCCH-SpatialRelationInfo) (by at least one of PUCCH configuration and MAC CE). The PUCCH spatial relation includes an ID of P0 in the P0 set (P0-PUCCH-Id) .

[Aspect 4a-2]

Parameter A and parameter B are configured as the same (common) parameter. The UE may use the common parameter for both of PUCCH A and PUCCH B.

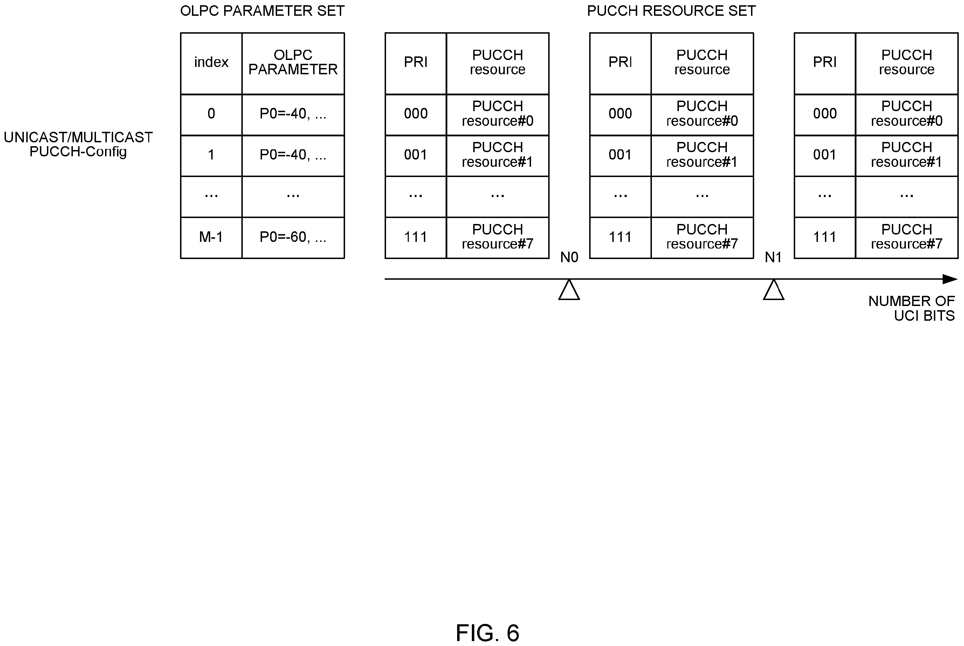

In an example of FIG. 6, PUCCH configuration (for example, PUCCH-Config) common to two cast types includes parameter set (for example, a P0 set (p0-Set), a pathloss reference RS list (pathlossReferenceRSs), or the like) for OLPC and one or more PUCCH resource sets (PUCCH resource set #0, PUCCH resource set #1, ...). Each PUCCH resource set includes one or more PUCCH resources. Each PUCCH resource is associated with a PUCCH spatial relation (PUCCH-SpatialRelationInfo) (by at least one of PUCCH configuration and MAC CE). The PUCCH spatial relation includes an ID of P0 in the P0 set (P0-PUCCH-Id).

[Aspect 4a-3]

A plurality of parameter sets are configured in common for the two cast types (unicast PDSCH and multicast PDSCH). The UE may use (determine/apply/select) one of the plurality of parameter sets based on an RRC parameter/MAC CE/DCI format/DCI field/PDCCH (DCI CRC) scrambling RNTI/CORESET/search space/UE capability.

[Aspect 4a-4]

When parameter B is configured (parameter A and parameter B are configured), the UE may use parameter A and parameter B for respective PUCCH A and PUCCH B. When parameter B is not configured (only parameter A is configured), the UE may use parameter A for PUCCH A and PUCCH B.

[Aspect 4a-5]

The UE uses (determines/applies/selects) any one of aspect 4a-1 and aspect 4a-2 based on whether PUCCH resource configuration for PUCCH A and PUCCH resource configuration for PUCCH B are the same.
According to aspect 4a, with respect to a PUCCH for HARQ-ACK transmission corresponding to a unicast PDSCH and a PUCCH for HARQ-ACK transmission corresponding to a multicast PDSCH, an OLPC parameter is definite.

<<Aspect 4b>>

With respect to HARQ-ACK transmission corresponding to a multicast PDSCH, OLPC parameter A related to UE-specific PUCCH resource configuration and OLPC parameter B related to group-common PUCCH resource configuration may follow at least one of aspect 4b-1 to aspect 4b-5 below. The UE may transmit PUCCH A for the HARQ-ACK transmission corresponding to the multicast PDSCH based on OLPC parameter A related to the UE-specific PUCCH resource configuration. The UE may transmit PUCCH B for the HARQ-ACK transmission corresponding to the multicast PDSCH based on OLPC parameter B related to the group-common PUCCH resource configuration.

[Aspect 4b-1]

Parameter A and parameter B are configured separately. The UE may use parameter A and parameter B for respective PUCCH A and PUCCH B.

[Aspect 4b-2]

Parameter A and parameter B are configured as the same (common) parameter. The UE may use the common parameter for both of PUCCH A and

PUCCH B.

[Aspect 4b-3]

A plurality of parameter sets are configured in common for two PUCCH resource configurations (UE-specific PUCCH resource configuration and group-common PUCCH resource configuration). The UE may use (determine/apply/select) one of the plurality of parameter sets based on an RRC parameter/MAC CE/DCI format/DCI field/PDCCH (DCI CRC) scrambling RNTI/CORESET/search space/UE capability.

[Aspect 4b-4]

When parameter B is configured (parameter A and parameter B are configured), the UE may use parameter A and parameter B for respective PUCCH A and PUCCH B. When parameter B is not configured (only parameter A is configured), the UE may use parameter A for PUCCH A and PUCCH B.

[Aspect 4b-5]

The UE uses (determines/applies/selects) any one of aspect 4b-1 and aspect 4b-2 based on whether PUCCH resource configuration for PUCCH A and PUCCH resource configuration for PUCCH B are the same.

According to aspect 4b, with respect to UE-specific PUCCH resource configuration and group-common PUCCH resource configuration, an OLPC parameter is definite.

<<Aspect 4c>>

With respect to HARQ-ACK transmission corresponding to a multicast PDSCH, OLPC parameter A related to PUCCH resource configuration for ACK/NACK feedback and OLPC parameter B related to PUCCH resource configuration for NACK-only feedback may follow at least one of aspect 4c-1 to aspect 4c-5 below. The UE may transmit PUCCH A for the HARQ-ACK transmission corresponding to the multicast PDSCH based on OLPC parameter A related to the PUCCH resource configuration for ACK/NACK feedback. The UE may transmit PUCCH B for the HARQ-ACK transmission corresponding to the multicast PDSCH based on OLPC parameter B related to the PUCCH resource configuration for NACK-only feedback.

[Aspect 4c-1]

Parameter A and parameter B are configured separately. The UE may use parameter A and parameter B for respective PUCCH A and PUCCH B.

[Aspect 4c-2]

Parameter A and parameter B are configured as the same (common) parameter. The UE may use the common parameter for both of PUCCH A and PUCCH B.

[Aspect 4c-3]

A plurality of parameter sets are configured in common for two PUCCH resource configurations (PUCCH resource configuration for ACK/NACK feedback and PUCCH resource configuration for a PUCCH resource configuration and NACK-only feedback). The UE may use (determine/apply/select) one of the plurality of parameter sets based on an RRC parameter/MAC CE/DCI format/DCI field/PDCCH (DCI CRC) scrambling RNTI/CORESET/search space/UE capability.

[Aspect 4c-4]

When parameter B is configured (parameter A and parameter B are configured), the UE may use parameter A and parameter B for respective PUCCH A and PUCCH B. When parameter B is not configured (only parameter A is configured), the UE may use parameter A for PUCCH A and PUCCH B.

[Aspect 4c-5]

The UE uses (determines/applies/selects) any one of aspect 4c-1 and aspect 4c-2 based on whether PUCCH resource configuration for PUCCH A and PUCCH resource configuration for PUCCH B are the same.

According to aspect 4c, with respect to PUCCH resource configuration for ACK/NACK feedback and PUCCH resource configuration for NACK-only feedback, an OLPC parameter is definite.

<Fifth Embodiment>

A higher layer parameter (RRC information element)/UE capability corresponding to at least one function (characteristic, feature) in the first to third embodiments may be defined. The UE capability may indicate that the UE supports the function.

A UE for which the higher layer parameter corresponding to the function is configured may perform the function. It may be defined that a UE for which the higher layer parameter corresponding to the function is not configured does not perform the function.

A UE that reports the UE capability indicating that the UE supports the function may perform the function. It may be defined that a UE that does not report the UE capability indicating that the UE supports the function does not perform the function.

When a UE reports the UE capability indicating that the UE supports the function, and the higher layer parameter corresponding to the function is configured, the UE may perform the function. It may be defined that when a UE does not report the UE capability indicating that the UE supports the function or when the higher layer parameter corresponding to the function is not configured, the UE does not perform the function.

According to this embodiment, the UE can achieve the above-described function while maintaining compatibility with existing specifications.

(Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

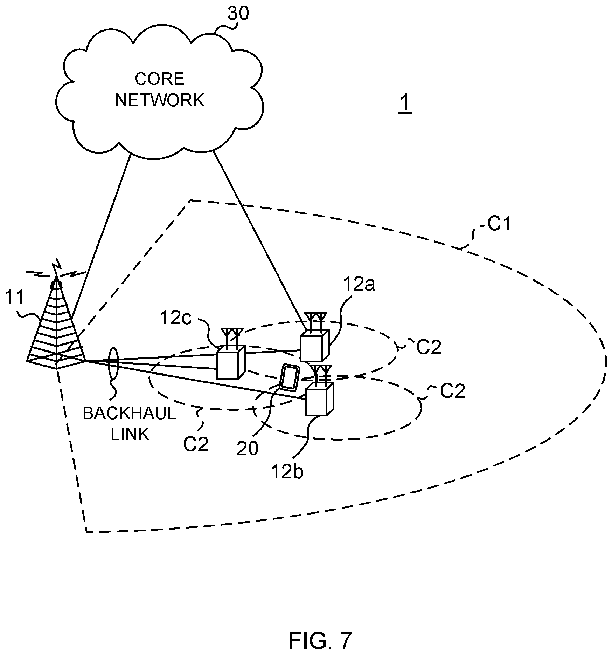

FIG. 7 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, or the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be transmitted as an uplink reference signal (UL-RS). Note that DMRS may be referred to as a "user terminal specific reference signal (UE-specific Reference Signal)."

(Base Station)

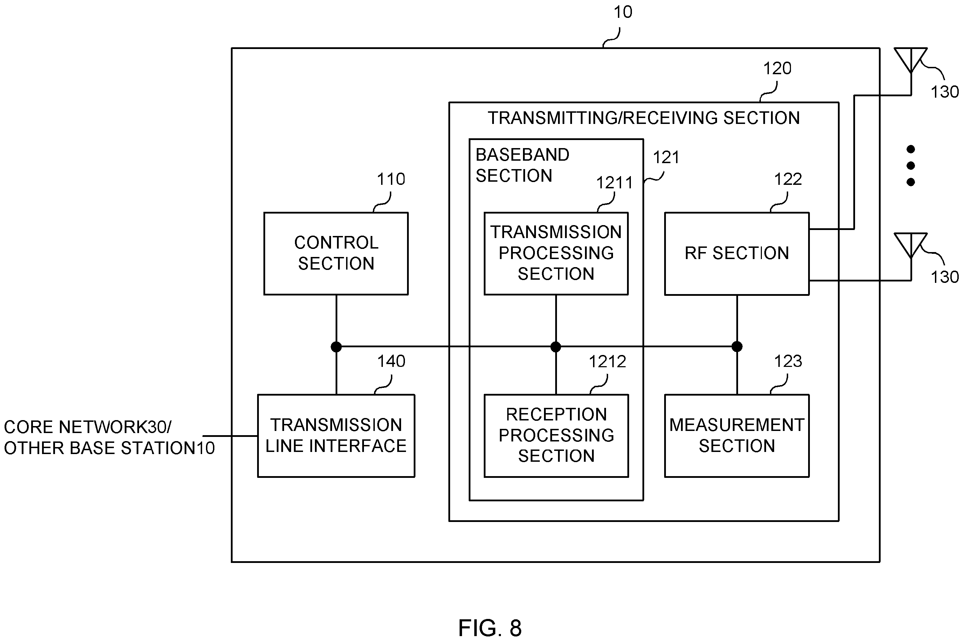

FIG. 8 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The control section 110 may determine at least one of a higher layer parameter and a transmission power control (TPC) command for determination of transmission power for a physical uplink control channel (PUCCH) for transmission of hybrid automatic repeat reQuest acknowledgement (HARQ-ACK) information for a multicast physical downlink shared channel (PDSCH). The transmitting/receiving section 120 may transmit at least one of the higher layer parameter and the TPC command.

(User Terminal)

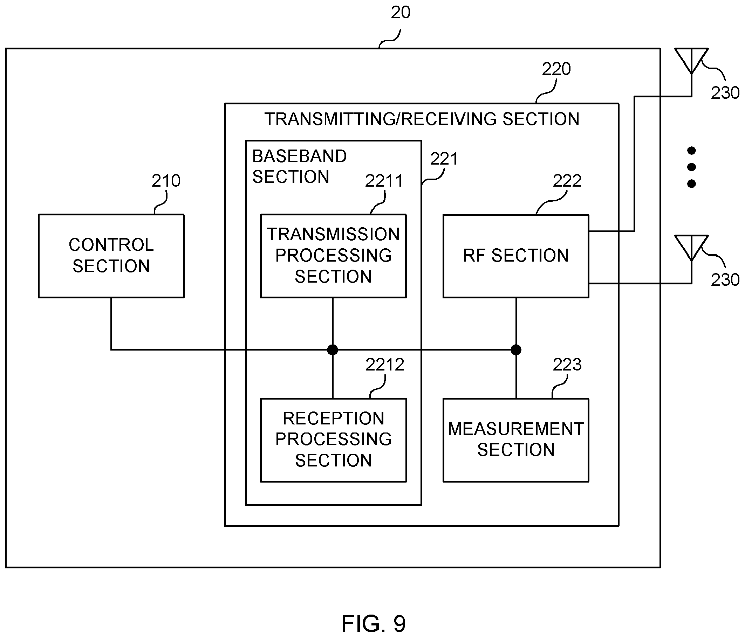

FIG. 9 is a diagram to show an example of a structure of a user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The control section 210 may determine transmission power for a physical uplink control channel (PUCCH) for transmission of hybrid automatic repeat reQuest acknowledgement (HARQ-ACK) information for a multicast physical downlink shared channel (PDSCH) based on at least one of a higher layer parameter and a transmission power control (TPC) command. The transmitting/receiving section 220 may transmit the PUCCH by using the transmission power.

The multicast PDSCH may be scheduled by group-common downlink control information (first embodiment).

The control section 210 may determine the transmission power based on at least one of a TPC command for the PUCCH and a second TPC command for a second PUCCH for transmission of second HARQ-ACK information for a unicast PDSCH (second embodiment).

When a method for transmitting only a negative acknowledgement (NACK) is applied to the PUCCH, and the PUCCH is not transmitted, the control section 210 may determine an accumulated value of the TPC command after the PUCCH (third embodiment).

(Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, or the like, but function are by no means limited to these. For example, functional block (components) to implement a function of transmission may be referred to as a "transmitting section (transmitting unit)," a "transmitter," or the like. The method for implementing each component is not particularly limited as described above.

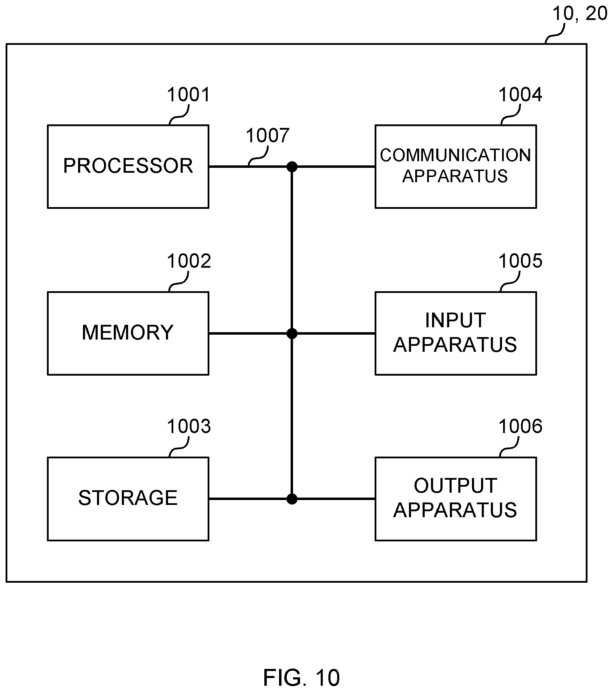

For example, a base station, a user terminal, and so on according to one embodiment of the present disclosure may function as a computer that executes the processes of the radio communication method of the present disclosure. FIG. 10 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, or the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmission power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmission power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, or the like), may be a moving object which moves unmanned (for example, a drone, an automatic operation car, or the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, or the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," or the like). In this case, user terminals 20 may have the functions of the base stations 10 described above. The words "uplink," "downlink," or the like may be interpreted as the words corresponding to the terminal-to-terminal communication (for example, "sidelink"). For example, an uplink channel, a downlink channel, or the like may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, or the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," or the like.

"The maximum transmission power" according to the present disclosure may mean a maximum value of the transmission power, may mean the nominal maximum transmission power (the nominal UE maximum transmission power), or may mean the rated maximum transmission power (the rated UE maximum transmission power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

**Claims**

1. A terminal comprising:

   a control section that determines transmission power for a physical uplink control channel (PUCCH) for transmission of hybrid automatic repeat reQuest acknowledgement (HARQ-ACK) information for a multicast physical downlink shared channel (PDSCH) based on at least one of a higher layer parameter and a transmission power control (TPC) command; and
   a transmitting section that transmits the PUCCH by using the transmission power.

2. The terminal according to claim 1, wherein
   the multicast PDSCH is scheduled by group-common downlink control information.

3. The terminal according to claim 1 or 2, wherein
   the control section determines the transmission power based on at least one of a TPC command for the PUCCH and a second TPC command for a second PUCCH for transmission of second HARQ-ACK information for a unicast PDSCH.

4. The terminal according to any one of claims 1 to 3, wherein
   when a method for transmitting only a negative acknowledgement (NACK) is applied to the PUCCH, and the PUCCH is not transmitted, the control section determines an accumulated value of the TPC command after the PUCCH.

5. A radio communication method for a terminal, the radio communication method comprising:

determining transmission power for a physical uplink control channel (PUCCH) for transmission of hybrid automatic repeat reQuest acknowledgement (HARQ-ACK) information for a multicast physical downlink shared channel (PDSCH) based on at least one of a higher layer parameter and a transmission power control (TPC) command; and
transmitting the PUCCH by using the transmission power.

6. A base station comprising:

a control section that determines at least one of a higher layer parameter and a transmission power control (TPC) command for determination of transmission power for a physical uplink control channel (PUCCH) for transmission of hybrid automatic repeat reQuest acknowledgement (HARQ-ACK) information for a multicast physical downlink shared channel (PDSCH); and
a transmitting section that transmits at least one of the higher layer parameter and the TPC command.

PTM transmission scheme 1

FREQUENCY

UE-specific
PDCCH

SCHEDULING

group-common
PDSCH

TIME

EP 4 266 766 A1

FIG. 1

PTM transmission scheme 2

FREQUENCY

group-common
PDCCH

SCHEDULING

group-common
PDSCH

TIME

EP 4 266 766 A1

FIG. 2

# FIG. 3A

FOR UE #1 AND UE #2

DCI     ⋯    | TPC command |    ⋯

→ DCI FIELD POSITION

# FIG. 3B

| TPC command field value | TPC command for UE#1 | TPC command for UE#2 |
|---|---|---|
| 00 | -1 | -1 |
| 01 | +1 | -1 |
| 10 | -1 | +1 |
| 11 | +1 | +1 |

EP 4 266 766 A1

FOR UE #1     FOR UE #2

DCI     ...  | TPC command1 | TPC command2 |  ...

→ DCI FIELD POSITION

FIG. 4

**OLPC PARAMETER SET**

**UNICAST PUCCH-Config**

| index | OLPC PARAMETER |
|-------|----------------|
| 0 | P0=-40, ... |
| 1 | P0=-40, ... |
| ... | ... |
| M-1 | P0=-60, ... |

**PUCCH RESOURCE SET**

| PRI | PUCCH resource |
|-----|----------------|
| 000 | PUCCH resource#0 |
| 001 | PUCCH resource#1 |
| ... | ... |
| 111 | PUCCH resource#7 |

N0

| PRI | PUCCH resource |
|-----|----------------|
| 000 | PUCCH resource#0 |
| 001 | PUCCH resource#1 |
| ... | ... |
| 111 | PUCCH resource#7 |

N1

| PRI | PUCCH resource |
|-----|----------------|
| 000 | PUCCH resource#0 |
| 001 | PUCCH resource#1 |
| ... | ... |
| 111 | PUCCH resource#7 |

NUMBER OF UCI BITS

**OLPC PARAMETER SET**

**MULTICAST PUCCH-Config**

| index | OLPC PARAMETER |
|-------|----------------|
| 0 | P0=-50, ... |
| 1 | P0=-40, ... |
| ... | ... |
| M-1 | P0=-60, ... |

**PUCCH RESOURCE SET**

| PRI | PUCCH resource |
|-----|----------------|
| 000 | PUCCH resource#0 |
| 001 | PUCCH resource#1 |
| ... | ... |
| 111 | PUCCH resource#7 |

N0

| PRI | PUCCH resource |
|-----|----------------|
| 000 | PUCCH resource#0 |
| 001 | PUCCH resource#1 |
| ... | ... |
| 111 | PUCCH resource#7 |

N1

| PRI | PUCCH resource |
|-----|----------------|
| 000 | PUCCH resource#0 |
| 001 | PUCCH resource#1 |
| ... | ... |
| 111 | PUCCH resource#7 |

NUMBER OF UCI BITS

FIG. 5

OLPC PARAMETER SET

UNICAST/MULTICAST PUCCH-Config

| index | OLPC PARAMETER |
|-------|----------------|
| 0 | P0=-40, ... |
| 1 | P0=-40, ... |
| ... | ... |
| M-1 | P0=-60, ... |

PUCCH RESOURCE SET

| PRI | PUCCH resource |
|-----|----------------|
| 000 | PUCCH resource#0 |
| 001 | PUCCH resource#1 |
| ... | ... |
| 111 | PUCCH resource#7 |

N0

| PRI | PUCCH resource |
|-----|----------------|
| 000 | PUCCH resource#0 |
| 001 | PUCCH resource#1 |
| ... | ... |
| 111 | PUCCH resource#7 |

N1

| PRI | PUCCH resource |
|-----|----------------|
| 000 | PUCCH resource#0 |
| 001 | PUCCH resource#1 |
| ... | ... |
| 111 | PUCCH resource#7 |

NUMBER OF UCI BITS

FIG. 6

FIG. 7

FIG. 8

EP 4 266 766 A1

FIG. 9

10, 20

1001

PROCESSOR

1007

1004

COMMUNICATION
APPARATUS

1002

MEMORY

1005

INPUT
APPARATUS

1003

STORAGE

1006

OUTPUT
APPARATUS

FIG. 10

<div align="center">

## INTERNATIONAL SEARCH REPORT

</div>

| | International application No. |
|---|---|
| | PCT/JP2020/047767 |

**A. CLASSIFICATION OF SUBJECT MATTER**
Int.Cl. H04W52/04(2009.01)i
FI: H04W52/04

According to International Patent Classification (IPC) or to both national classification and IPC

**B. FIELDS SEARCHED**

Minimum documentation searched (classification system followed by classification symbols)
Int.Cl. H04W52/04

Documentation searched other than minimum documentation to the extent that such documents are included in the fields searched
    Published examined utility model applications of Japan    1922-1996
    Published unexamined utility model applications of Japan    1971-2021
    Registered utility model specifications of Japan    1996-2021
    Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y<br>A | VIVO, Discussion on mechanisms to support group scheduling for RRC_CONNECTED UEs [online], 3GPP TSG RAN WG1 #103-e R1-2007691, 01 November 2020, particularly, 2.3. Group scheduling mechanism for MBS | 1-3, 5-6<br>4 |
| Y | WO 2010/146972 A1 (SHARP CORPORATION) 23 December 2010 (2010-12-23), claims, paragraphs [0014]-[0019] | 1-3, 5-6 |
| A | MEDIATEK INC., Discussion on HARQ operation for NR MBS reliable transmission [online], 3GPP TSG RAN WG1 #103-e R1-2008962, 01 November 2020, entire text, all drawings | 1-6 |
| A | US 2019/0132104 A1 (LG ELECTRONICS INC.) 02 May 2019 (2019-05-02), entire text, all drawings | 1-6 |

☐ Further documents are listed in the continuation of Box C.   ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 June 2021 | 29 June 2021 |

| Name and mailing address of the ISA/<br>  Japan Patent Office<br>  3-4-3, Kasumigaseki, Chiyoda-ku,<br>  Tokyo 100-8915, Japan | Authorized officer |
|---|---|
| | Telephone No. |

Form PCT/ISA/210 (second sheet) (January 2015)

INTERNATIONAL SEARCH REPORT
Information on patent family members

| International application No. |
| --- |
| PCT/JP2020/047767 |

```
WO 2010/146972 A1  23 December 2010     US 2012/0087334 A1
                                        claims, paragraphs [0015]-[0023]
                                        EP 2445272 A1
                                        CN 102804868 A

US 2019/0132104 A1 02 May 2019          WO 2017/192009 A1
                                        entire text, all drawings
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Evolved Universal Terrestrial Radio Access (E-UTRA) and Evolved Universal Terrestrial Radio Access Network (E-UTRAN); Overall description; Stage 2 (Release 8). *3GPP TS 36.300 V8.12.0,* April 2010